# EUROPEAN PATENT SPECIFICATION

(11) **EP 2 978 554 B1**
(45) Date of publication and mention of the grant of the patent: **03.05.2017**
(21) Application number: 14727904.6
(22) Date of filing: 25.03.2014
(51) Int. Cl.: B23K 11/14, B23K 11/18

(54) **METHOD FOR CLOSING AN END PART OF A HEATING RADIATOR ELEMENT, AND ALUMINIUM RADIATOR ELEMENT**
VERFAHREN ZUM VERSCHLIESSEN EINES ENDTEILS EINES ALUMINIUMHEIZKÖRPERELEMENTES UND ALUMINIUMHEIZKÖRPERELEMENT
PROCÉDÉ CONÇU POUR LA FERMETURE DE LA PARTIE TERMINALE D'UN ÉLÉMENT DE RADIATEUR, ET ÉLÉMENT DE RADIATEUR

(30) Priority: 25.03.2013 IT MI20130447
(43) Date of publication of application: 03.02.2016
(73) Proprietor: FONDITAL S.p.A., Vobarno (BS) (IT)
(72) Inventor: NIBOLI, Orlando, I-25079 Vobarno (IT); SASSI, Fabio, I-25079 Carpeneda di Vobarno (IT)
(74) Representative: Cernuzzi, Daniele
(86) International application number: PCT/IB2014/060144
(87) International publication number: WO 2014/155295

(56) References cited:
- WO-A1-2011/012981
- BE-A1- 826 256
- US-A- 3 598 952
- US-A- 3 805 014
- US-A- 4 912 295
- US-A1- 2005 051 603

## Description

### TECHNICAL FIELD

The present invention relates to a method for closing an end part of an aluminium heating radiator element and to an aluminium heating radiator element made with such a method.

### BACKGROUND ART

As known, an aluminium radiator element, for example, made of die-cast aluminium, typically has a tubular body which extends along an axis and has an end part which, due to construction needs, is bottomly open; the end part therefore has a bottom opening arranged along the axis, in addition to, typically, a pair of lateral opposite holes to allow the connection of the element to other similar elements.

Different systems are known for closing the bottom opening of a radiator element.

In addition to various mechanical systems, which generally use plastic deformation of hooking portions of the cap and/or of the body of the radiator element, it is also known to weld the cap to the body of the radiator element.

However, in the case of aluminium, traditional welding techniques, such as for example flash welding, are not completely satisfactory, as they are relatively costly, slow, complicated and they do not generally allow an adequate mechanical and pressure resistance to be obtained.

These problems are emphasized, more generally, in all cases when there is a need to join two aluminium components.

US3805014 discloses a method for joining two plates of aluminium: the plates are positioned so as respective contact edges, having corresponding shape and dimensions, contact each other; a welding current is supplied via lateral pressure electrodes under simultaneous spring pressure.

BE826256 discloses a generic metal radiator, in which a connector is joined to the radiator by electrical resistance

Document EP 2 318 798 B1 reveals a method for closing an end part of an aluminium heating radiator element.

### DISCLOSURE OF INVENTION

It is an object of the present invention to provide a method for joining aluminium components, which can be used as a closure method of an end part of an aluminium heating radiator element, which does not have the drawbacks emphasized by known art; in particular, it is an object of the invention to provide a radiator element having a bottom opening closed in a simple, effective and completely satisfactory manner.

The present invention therefore relates to a method for closing an end part of an aluminium heating radiator element, in particular made of die-cast aluminium, and to a radiator element made with such a method, as substantially defined in the appended claims 1 and 10, respectively.

The present invention provides an extremely effective, simple, quick and affordable method for closing the end part of an aluminium radiator element with a cap (also made of aluminium).

The cap is not secured, according to the invention, with a normal welding process; indeed, traditional welding techniques cannot be concretely used with the materials and shapes involved.

In accordance with the invention, the cap and the end part of the radiator element are instead joined via a thermo-electric melting process, performed by circulating current through the pieces to be joined to cause the local melting thereof, without the contribution of welding material.

The cap may have various shapes and dimensions, while it is essential, for the purposes of a proper fastening of the cap (fastening which ensures increased mechanical resistance, increased resistance to pressure and seal), that the contact edges of the cap and the end part of the radiator element are substantially equal in shape and dimensions, so as to reach the melting state at the same time.

In order for the process to provide an effective joining, it is therefore preferable for the contact edges of the cap and of the end part of the radiator element to be identical; with different geometries, in particular if the cap and the end part are in contact, when the melting is performed, via respective contact edges which are different in shape and/or dimensions, a truly effective joining is not achieved.

Since the passage from the softening state of the aluminium to the melting thereof occurs in very short periods of time, to obtain the perfect and efficient joining of the cap with the radiator element via the thermo-electric melting system, the contact surfaces must reach the melting state at the same moment. This is ensured by the solution according to the invention.

The invention attains the following advantages with respect to known arts:
- increased resistance to pressure and to tearing: it has been observed that with the method of the invention, the parts (cap and body of the radiator element) become in fact a single body, with increased resistance values to pressure and tearing;
- energy/economic savings: with respect to traditional flash welding systems, by using a thermo-electric melting process, the method of the invention required reduces power consumption. Furthermore, with respect to machines used to perform flash welding, the thermo-electric melting system requires a smaller contribution of compressed air for its operation; therefore, there is overall reduced power consumption and hence economic savings and increased protection of the environment;

- acceleration of the production process: the process of the invention allows the cap to be secured to the body of the radiator element more quickly with respect to traditional flash welding systems;
- no waste of raw material: with a traditional (flash) welding system, part of the raw material (aluminium) of which both components to be welded (cap and body of the radiator element) are formed, is necessarily transformed into slag which, in addition to being unused raw material, is also to be recovered and disposed of, with further increase in costs; with the method of the invention, there is no waste of raw material or production of slags; indeed, the material involved in the processing is only melted, without scraps;
- improvement in the work environment: the method of the invention does not generate fumes during processing, resulting in there being no need for suction; furthermore, with respect to traditional (flash) welding systems, the method of the invention is more noiseless;
- slags and/or burrs are not formed outside the radiator element, as normally occurs with traditional welding techniques (flash welding), with subsequent improved finished appearance;
- welding slags and/or burrs are not even formed inside the radiator element; thus problems are avoided associated with the possible dispersion of slags in the water circuit.

### BRIEF DESCRIPTION OF THE DRAWINGS

Further features and advantages of the present invention will become clear from the description of the following non-limiting embodiments, with reference to the figures of the accompanying drawings, in which:
- figure 1 is a side view of a heating radiator element in accordance with the invention, having an end part provided with a closure cap, shown in a mounting step;
- figure 2 is a longitudinal sectional view of the end part of the radiator element in figure 1;
- figures 3 and 4 are two longitudinal sectional views, according to two orthogonal planes, of a detail of the radiator element of figure 2 and show the cap in mounting configuration and in assembled configuration, respectively;
- figures 5-7 are schematic views in longitudinal section, of various embodiments of the invention;
- figure 8 is a perspective schematic view of a machine for implementing the method in accordance with the invention.

### BEST MODE FOR CARRYING OUT THE INVENTION

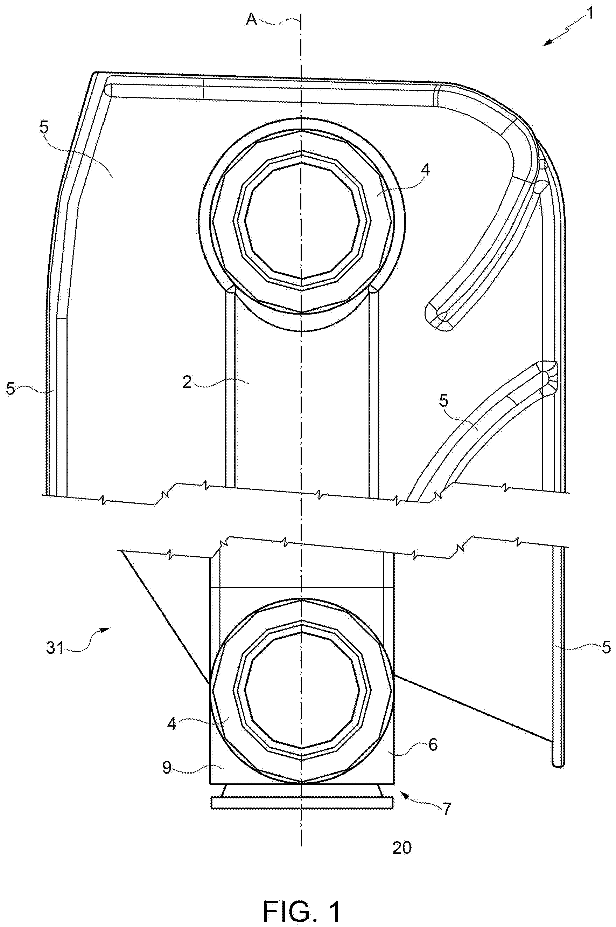

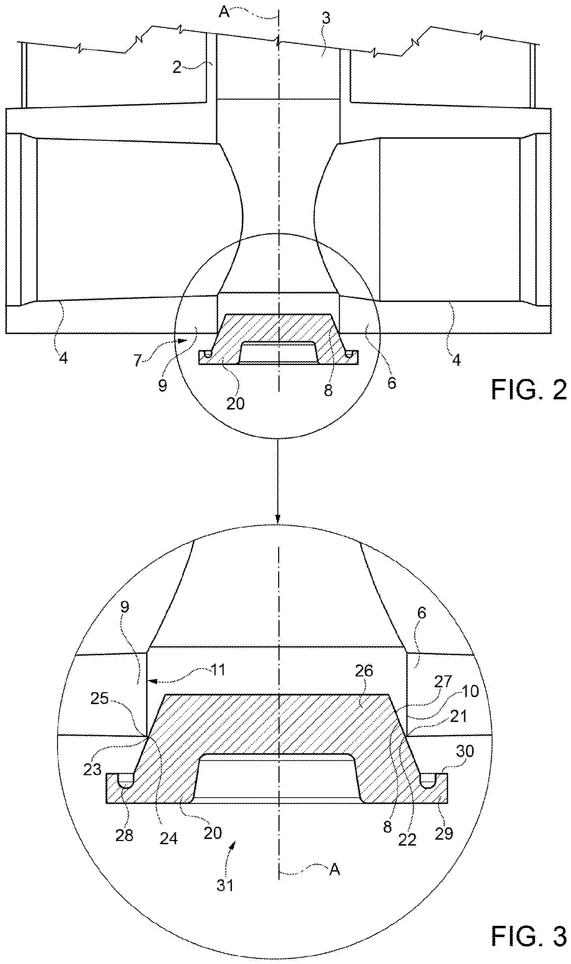

Numeral 1 in figures 1 and 2 indicates an aluminium heating radiator element as a whole, for example made of die-cast aluminium (i.e. made via an aluminium die-casting process); element 1 has a substantially tubular body 2, made of die-cast aluminium and provided with an inner chamber 3 for water circulation; body 2 and the radiator element 1 as a whole extend longitudinally along an axis A which, with reference to the normal position of use of element 1, is substantially vertical; element 1 is provided with transversal connector sleeves 4 for the connection to other radiator elements and/or to a water circuit, and with a plurality of fins and/or radiant plates 5 connected variously to each other and/or to body 2.

Body 2 has, for example, a transversal section, possibly variable along axis A, substantially circular or oval or elliptical, or of another shape again, and comprises an end part 6 arranged at a longitudinal end 7 of element 1, which, with reference to the normal position of use of element 1, may be a lower end or an upper end of element 1.

With reference also to figure 3, the end part 6 is substantially tubular and extends substantially along axis A and has a bottom opening 8 arranged along axis A and substantially transversal to axis A and delimited by an end edge 9. The end part 6 is delimited by a lateral wall 10 which has, for example, but not necessarily, a circular or substantially oval or elliptical transversal section.

The end part 6 is internally provided with a seat 11 communicating with opening 8.

Opening 8 is closed by a cap 20, preferably formed by an aluminium monolithic body extending along and about axis A.

The end part 6 of body 2 and cap 20 have, in a mounting configuration preceding the joining thereof (i.e. before being joined), respective melting portions 21, 22 intended to melt with each other as a result of a thermo-electric melting process (performed without weld material and circulating current through the melting portions 21, 22) and to join intimately with each other, thus ensuring both the mechanical coupling and the hydraulic seal between the end part 6 and cap 20.

In figures 1-3, the end part 6 and cap 20 are shown in the mounting configuration, before being joined with each other.

In the mounting configuration, the melting portions 21, 22 of the end part 6 and of cap 20 project from the end part 6 and from cap 20, respectively, so as to contact each other with respective contact edges 23, 24 which are substantially equal and preferably identical in shape and dimensions as to melt at the same time following the passage of current.

In other words, the melting portions 21, 22 have such a shape as to contact each other along respective contact edges 23, 24 which may be contact profiles (i.e. substantially lines), having substantially the same shape and dimension (length), or contact surfaces, having substantially the same shape and dimension (area).

In the embodiment in figures 1-3, the melting portions 21, 22 contact each other along the respective contact edges 23, 24 defined by respective annular profiles, each of which is substantially defined by a curved line closed in a loop about axis A.

In particular, the melting portion 21 of the end part 6 of body 2 is a portion of the end edge 9; the contact edge 23 of the end part 6 projects from the end edge 9 and is defined by an annular corner 25 set about axis A and opening 8.

Cap 20 comprises a closure portion 26 having a flared lateral surface 27, slanted with respect to axis A and insertable at least partially in seat 11. The melting portion 22 of cap 20 is a portion of the lateral surface 27.

When the closure portion 26 of cap 20 is inserted in seat 11, the melting portion 22 of cap 20 contacts the melting portion 21 of the end part 6; precisely, the contact edge 23 of the end part 6, defined by the annular corner 25, and the contact edge 24 of cap 20, defined by a corresponding annular profile on the lateral surface 27, come in contact.

Rather than a contact profile defined by a corner, the contact edge 23 of the end part 6 of body 2 may alternatively consist of a contact surface, for example defined by a bevel of the end edge 9; the contact edge 23 may for example have an annular surface facing the lateral surface 27 of cap 20 and therefore in turn slanted with respect to axis A, like the lateral surface 27. In this case, cap 20 and the end part 6 contact with respective annular contact surfaces having equal shape and equal dimensions, i.e. having substantially the same area.

Cap 20 is joined to the end part 6 via a thermo-electric melting process which makes integral the melting portions 21, 22 of the end part 6 and of cap 20, as will become apparent below.

Cap 20 is provided, about the contact edge 24, with a collecting groove 28 that serves to collect possible melting slugs that are formed in the thermo-electric melting process.

In the embodiment in figures 1-4, cap 20 comprises a radially outer flange 29 positioned about the closure portion 26. Flange 29 has a front surface 30, facing the end edge 9 and provided with groove 28 which consists of a continuous circumferential slot about axis A.

In use, i.e. when cap 20 has been joined to the end part 6, the closure portion 26 is arranged at least partly in seat 11 inside the end part 6, while flange 29 remains outside seat 11 and rests axially abutting with its front surface 30 against the end edge 9.

Preferably, groove 28 contacts the lateral surface 27 of the closure portion 26.

In accordance with the invention, the bottom opening 8 of the end part 6 is closed with the following method.

Cap 20 is arranged in an initial mounting configuration (shown in figures 1-3) in which the end part 6 and cap 20 contact each other via the respective contact edges 23, 24 to form a preassembled assembly 31.

Cap 20 is partly inserted in seat 11 or is in any event arranged to close opening 8 in front of seat 11; the closure portion 26 of cap 20 penetrates seat 11, through opening 8 until the contact edges 23, 24 contact each other.

The melting portions 21, 22 of the end part 6 and of cap 20 therefore contact each other via respective contact edges 23, 24, while flange 29 is facing the end edge 9 and is axially spaced from the end edge 9.

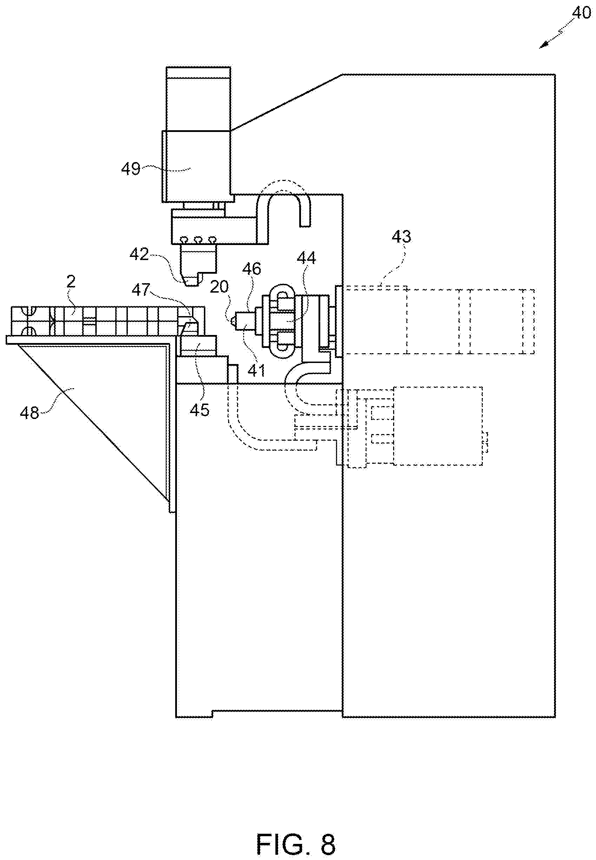

Body 2 and cap 20 are arranged, separately or already preassembled to form assembly 31, on a thermo-electric melting machine 40, shown diagrammatically in figure 8.

Machine 40 comprises a pair of electrodes 41, 42, an electric circuit (not shown) which supplies current of a preset intensity among the electrodes 41, 42, and a compression system 43 having two elements 44, 45 which move (slide) with respect to each other.

Cap 20 and body 2 of the radiator element 1 are positioned on elements 44, 45, respectively; the electrodes 41, 42 are connected to cap 20 and body 2 of the radiator element 1, respectively.

In the non-limiting embodiment shown in figure 8, element 44 comprises a pushing member 46 which moves along axis A and which carries electrode 41; electrode 41 supports cap 20, while holding it for example in a housing via a depression (vacuum) system.

For example, element 45 comprises a vice 47 which holds body 2 fixed on a chuck shelf 48.

Electrode 42 is arranged above shelf 48 and therefore body 2, in particular above the end part 6, and is movable vertically, via a moving system 49, to be carried to contact the end part 6 so as to distribute the current on the whole part which is to be melted.

The compression system 43 operates to push cap 20 towards the end part 6 along axis A; machine 40 is configured so as to supply a current of preset intensity through assembly 31 formed by cap 20 and by body 2 and to apply an axial thrust parallel to axis A which pushes cap 20 against the end part 6 during the passage of current.

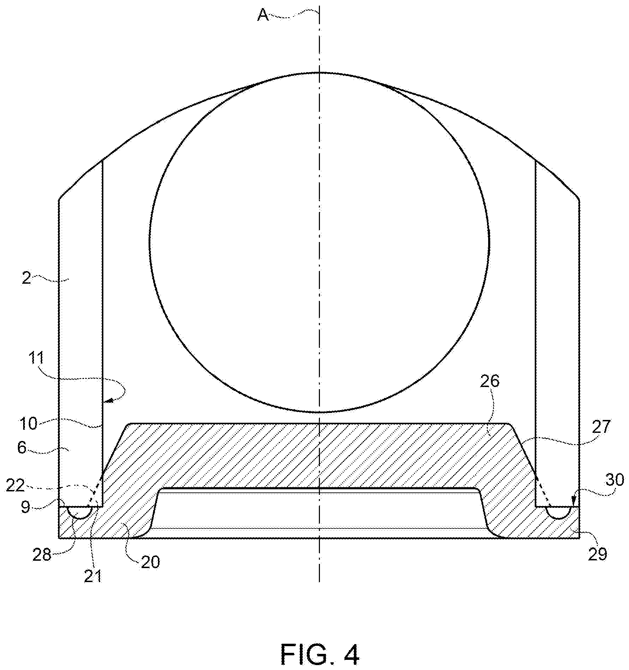

The current flows in cap 20 and in body 2, in particular running through the contact edges 23, 24; the passage of current causes the raising of temperature in the melting portions 21, 22 which melt thus realizing the joining of cap 20 and of the end part 6 (figure 4). At the same time, cap 20 is pushed against the end part 6 (or vice versa) until flange 29 rests axially abutting with its front surface 30 against the end edge 9.

The thermo-electric melting process occurs by circulating current through the melting portions 21, 22 to raise the temperature thereof until the simultaneous melting of the contact edges 23, 24, and without weld material, i.e. using only material of the melting portions 21, 22 caused to melt at the same time, without the contribution of weld material.

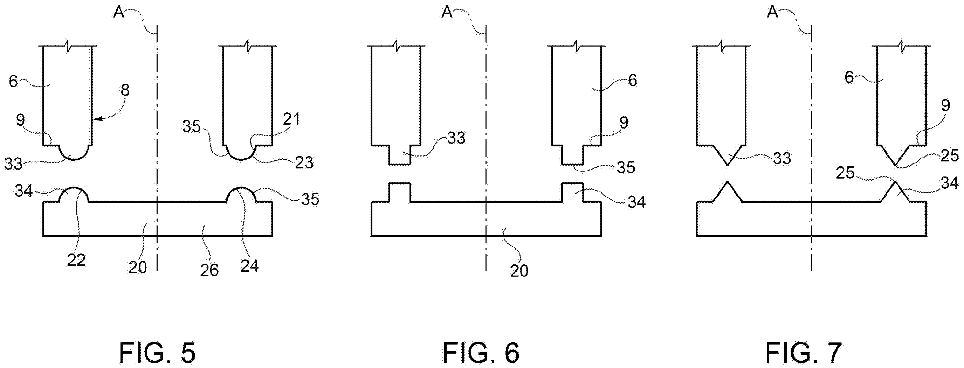

Figures 5-7 exemplify various embodiments of the invention in an extremely diagrammatical form.

The contact edges 23, 24 may have various shapes, so long as the contact edge 23 of the end part 6 of body 2 and the contact edge 24 of cap 20 have substantially the same shape and substantially the same (and preferably identical) dimensions, so as to melt at the same time when the current is applied by the thermo-electric melting machine.

Preferably, as already described, the contact edges 23, 24 substantially consist of profiles or lines; clearly, in these cases too contact between the contact edges 23, 24 occurs concretely on an operating surface (contact between two actual solid bodies along a mono-dimensional line not being possible in practice, especially as industrial products are involved).

In the embodiments in figures 5-7, the end part 6 of body 2 has an annular projection 33 which projects axially from the end edge 9 and is set about axis A and opening 8. Projection 33 is provided with the contact edge 23 of the end part 6.

Cap 20 has a corresponding annular projection 34 which projects from cap 20 towards projection 33 and faces it.

In particular, cap 20 has a substantially flat closure portion 26 perpendicular to axis A, from which projection 34 projects. Projection 34 is symmetrical and mirroring with respect to projection 33, having the same shape and the same dimensions as projection 33, so that the contact edges 23, 24 are equal. The contact edges 23, 24 touch along a closed annular profile.

In the embodiment in figure 5, projection 33 and projection 34 have arch-shaped cross section, for example substantially semi-circular, and therefore have respective opposite outer annular surfaces 35 which are generically convex and facing, and opposite to each other. The contact edges 23, 24 consist of the profiles of the surfaces 35 which touch each other.

In the embodiment in figure 6, projection 33 and projection 34 instead have respective outer annular surfaces 35 which are generically flat and parallel, face each other and are perpendicular to axis A; the contact edges 23, 24 consist of the surfaces 35.

In the embodiment in figure 7, each of the projections 33, 34 has cusp cross section, being defined by a pair of annular sides converging into a corner 25. The corners 25 are equal and opposite. The contact edges 23, 24 consist of the profiles of the corners 25 which touch each other.

It is finally understood that further modifications and variants may be made to the closure method and to the radiator element described and shown herein, which do not depart from the scope of the invention as defined in the appended claims.

## Claims

1. A method for closing an end part (6) of an aluminium heating radiator element (1), comprising the steps of:
- providing a substantially tubular body (2), made of aluminium and provided with an inner chamber (3) for water circulation and comprising a substantially tubular end part (6) that extends along an axis (A) and has a bottom opening (8) delimited by an end edge (9); and a cap (20) shaped so as to close the opening (8); the end part (6) and the cap (20) being provided with respective melting portions (21, 22) having respective contact edges (23, 24);
- placing the end part (6) and the cap (20) in a mounting configuration, in which the end part (6) and the cap (20) contact each other via the respective contact edges (23, 24) to form an assembly (31);
- performing a thermo-electric melting process of the assembly (31), in which the melting portions (21, 22) contacting each other via the respective contact edges (23, 24) melt and join intimately to make a monolithic piece;
- wherein the thermo-electric melting process comprises the steps of: positioning the cap (20) on a first element (44) and the end part (6) on a second element (45), which slide with respect to each other; connecting the cap (20) and the end part (6) to respective electrodes (41, 42); circulating a current of preset intensity through the assembly (31) among the electrodes (41, 42), and applying an axial thrust for pushing the end part (6) and the cap (20) one against the other during the passage of current; the first element (44) comprising a pushing member (46) which moves along an axis (A) and which carries a first electrode (41), which supports the cap (20), while holding said cap; a second electrode (42) being arranged above the second element (45) and being movable vertically to be carried to contact the end part (6) so as to distribute the current on the whole part which is to be melted; and
- wherein in the mounting configuration the contact edges (23, 24) of the end part (6) and the cap (20) have substantially equal shape and dimensions and the electrodes (41, 42) are arranged so as the contact edges (23, 24) reach the melting state at the same time.

2. A method according to claim 1, wherein in the mounting configuration the contact edges (23, 24) are identical.

3. A method according to claim 1 or 2, wherein in the thermo-electric melting process the current supplied in the assembly (31) runs through the contact edges (23, 24) with an intensity such as to cause a raising of the temperature in the melting portions (21, 22), enough to melt said melting portions (21, 22).

4. A method according to one of the preceding claims, wherein in the mounting configuration the melting portions (21, 22) contact each other along the respective contact edges (23, 24) defined by respective annular profiles, each of which is substantially defined by a curved line closed in a loop about the axis (A).

5. A method according to one of the preceding claims, wherein the contact edge (23) of the end part (6) is defined by an annular corner (25) set about the axis (A).

6. A method according to one of the preceding claims, wherein the end part (6) is internally provided with a seat (11) and wherein the cap (20) comprises a closure portion (26) having a flared lateral surface (27), slanted with respect to the axis (A) and insertable at least partially in the seat (11); the melting portion (22) of the cap (20) being a portion of the lateral surface (27) and the contact edge (24) of the cap (20) being defined by an annular profile on the lateral surface (27).

7. A method according to one of the preceding claims, wherein the contact edge (23) of the end part (6) of the body (2) consists of an annular surface facing a lateral surface (27) of the cap (20).

8. A method according to one of the preceding claims, wherein in the mounting configuration the cap (20) is provided with a collecting groove (28) that serves to collect possible melting slugs that are formed in the thermo-electric melting process.

9. A method according to claim 8, wherein the groove (28) is formed on a radially outer flange (29) of the cap (20).

10. Aluminium radiator element (1) for heating, having a body (2) made of aluminium, provided with an inner chamber (3) for water circulation and comprising a substantially tubular end part (6), that extends along an axis (A) and has a bottom opening (8) delimited by an end edge (9) and closed by a cap (20); the radiator element being **characterized in that** the end part (6) has been closed with the cap (20) by the method according to one of the preceding claims.

## Patentansprüche

1. Verfahren zum Verschließen eines Endteils (6) eines Heizkörperelements (1) aus Aluminium, umfassend die Schritte von:
- Bereitstellen eines im Wesentlichen röhrenförmigen Körpers (2), hergestellt aus Aluminium und versehen mit einer inneren Kammer (3) zum Wasserkreislauf und umfassend ein im Wesentlichen röhrenförmiges Endteil (6), welches sich entlang einer Achse (A) erstreckt und eine von einer Endkante (9) begrenzte Bodenöffnung (8) hat; sowie einen Verschlussdeckel (20), der dazu ausgeformt ist, die Öffnung (8) zu verschließen; wobei das Endteil (6) und der Verschlussdeckel (20) jeweils mit Schmelzabschnitten (21, 22) versehen sind, die jeweils Kontaktkanten (23, 24) aufweisen;
- Versetzen des Endteils (6) und des Verschlussdeckels (20) in eine Montageanordnung, bei welcher das Endteil (6) und der Verschlussdeckel (20) sich über die jeweiligen Kontaktkanten (23, 24) berühren, um eine Baugruppe (31) zu bilden;
- Durchführen eines thermoelektrischen Schmelzvorgangs der Baugruppe (31), bei welchem die sich über die jeweiligen Kontaktkanten (23, 24) berührenden Schmelzabschnitte (21, 22) schmelzen und sich eng verbinden, um ein einstückiges Teil zu bilden;
- wobei der thermoelektrische Schmelzvorgang die Schritte umfasst von: Versetzen des Verschlussdeckels (20) auf ein erstes Element (44) und des Endteils (6) auf ein zweites Element (45), welche Elemente in Bezug zueinander verschiebbar sind; Verbinden des Verschlussdeckels (20) und des Endteils (6) mit jeweiligen Elektroden (41, 42); Fließen lassen eines Stroms von voreingestellter Intensität durch die Baugruppe (31) zwischen den Elektroden (41, 42), und Bewirken eines axialen Vorschubs, um das Endteil (6) und den Verschlussdeckel (20) während des Durchgangs des Stroms gegeneinander zu drücken; wobei das erste Element (44) ein Drückelement (46) umfasst, das sich entlang einer Achse (A) bewegt und das eine erste Elektrode (41) trägt, die den Verschlussdeckel (20) abstützt, während sie den Verschlussdeckel hält; wobei eine zweite Elektrode (42) über dem zweiten Element (45) angeordnet ist und senkrecht bewegbar ist, um dazu transportiert zu werden, das Endteil (6) zu berühren, sodass der Strom auf dem gesamten zu schmelzenden Teil verteilt wird; und
- wobei in der Montageanordnung die Kontaktkanten (23, 24) des Endteils (6) und der Verschlussdeckel (20) eine im wesentlichen gleiche Gestalt und gleiche Abmaße aufweisen und die Elektroden (41, 42) so angeordnet sind, dass die Kontaktkanten (23, 24) zur gleichen Zeit den Schmelzzustand erreichen.

2. Verfahren gemäß Anspruch 1, wobei in der Montageanordnung die Kontaktkanten (23, 24) identisch sind.

3. Verfahren gemäß Anspruch 1 oder 2, wobei in dem thermoelektrischen Schmelzvorgang der in der Baugruppe (31) beaufschlagte Strom mit einer derartigen Intensität durch die Kontaktkanten (23, 24) fließt, dass eine Erhöhung der Temperatur in den Schmelzabschnitten (21, 22) verursacht wird, die ausreicht die Schmelzabschnitte (21, 22) zu schmelzen.

4. Verfahren gemäß irgendeinem der vorhergehenden Ansprüche, wobei in der Montageanordnung die Schmelzabschnitte (21, 22) sich entlang den jeweils durch ringförmige Profile definierten Kontaktkanten (23, 24) berühren, deren jede im Wesentlichen durch eine gekrümmte Linie definiert ist, die zu einer Schleife um die Achse (A) herum geschlossen ist.

5. Verfahren gemäß irgendeinem der vorhergehenden Ansprüche, wobei die Kontaktkante (23) des Endteils (6) durch eine über die Achse (A) gesetzte ringförmige Ecke (25) definiert ist.

6. Verfahren gemäß irgendeinem der vorhergehenden Ansprüche, wobei das Endteil (6) in Inneren mit einem Sitz (11) versehen ist und wobei der Verschlussdeckel (20) ein Verschlussteil (26) mit einer gebördelten seitlichen Fläche (27) umfasst, die in Bezug auf die Achse (A) abgeschrägt und mindestens teilweise in den Sitz (11) einsetzbar ist; wobei der Schmelzabschnitt (22) des Verschlussdeckels (20) ein Teil der seitlichen Fläche (27) ist und die Kontaktkante (24) des Verschlussdeckels (20) durch ein ringförmiges Profil auf der seitlichen Oberfläche (27) definiert wird.

7. Verfahren gemäß irgendeinem der vorhergehenden Ansprüche, wobei die Kontaktkante (23) des Endteils (6) des Körpers (2) aus einer ringförmigen Fläche gegenüber einer seitlichen Fläche (27) des Verschlussdeckels (20) besteht,

8. Verfahren gemäß irgendeinem der vorhergehenden Ansprüche, wobei in der Montageanordnung der Verschlussdeckel (20) mit einer Auffangrinne (28) versehen ist, welche dazu dient, eventuelle Schmelzabfälle auf zu sammeln, die in dem thermoelektrischen Schmelzprozess gebildet werden.

9. Verfahren gemäß Anspruch 8, wobei die Rinne (28) auf einem in Radialrichtung äußeren Flansch (29) des Verschlussdeckels (20) ausgebildet ist.

10. Heizkörperelement (1) aus Aluminium zum Heizen, mit einem aus Aluminium hergestellten Körper (2), der mit einer inneren Kammer (3) zum Wasserkreislauf versehen ist und ein im Wesentlichen röhrenförmiges Endteil (6) umfasst, welches sich entlang einer Achse (A) erstreckt und eine von einer Endkante (9) begrenzte sowie von einem Verschlussdeckel (20) verschlossene Bodenöffnung (8) aufweist; wobei das Heizkörperelement **dadurch gekennzeichnet ist, dass** das Endteil (6) mit dem Verfahren gemäß einem der vorhergehenden Ansprüche mit dem Verschlussdeckel (20) verschlossen wurde.

## Revendications

1. Procédé de fermeture d'une partie terminale (6) d'un élément de radiateur de chauffage en aluminium (1), comprenant les étapes suivantes:
- fournir un corps sensiblement tubulaire (2), constitué d'aluminium et pourvu d'une chambre intérieure (3) pour une circulation d'eau et comprenant une partie terminale sensiblement tubulaire (6) qui s'étend le long d'un axe (A) et qui comporte une ouverture inférieure (8) délimitée par un bord d'extrémité (9); et une coiffe (20) configurée de manière à fermer l'ouverture (8); la partie terminale (6) et la coiffe (20) étant pourvues de parties de fusion respectives (21, 22) présentant des bords de contact respectifs (23, 24);
- placer la partie d'extrémité (6) et la coiffe (20) dans une configuration de montage, dans laquelle la partie terminale (6) et la coiffe (20) entrent en contact l'une avec l'autre par l'intermédiaire des bords de contact respectifs (23, 24) pour former un ensemble (31);
- exécuter un procédé de fusion thermoélectrique de l'ensemble (31), dans lequel les parties de fusion (21, 22) qui entrent en contact l'une avec l'autre par l'intermédiaire des bords de contact respectifs (23, 24) fondent et se joignent intimement pour former une pièce monolithique;
- dans lequel le procédé de fusion thermoélectrique comprend les étapes:
- positionner la coiffe (20) sur un premier élément (44) et la partie terminale (6) sur un second élément (45) qui coulissent l'un par rapport à l'autre;
- connecter la coiffe (20) et la partie terminale (6) à des électrodes respectives (41, 42);
- faire circuler un courant d'une intensité prédéterminée à travers l'ensemble (31) entre les électrodes (41, 42); et
- appliquer une poussée axiale afin de pousser la partie terminale (6) et la coiffe (20) l'une contre l'autre pendant le passage du courant, le premier élément (44) comprenant un élément de poussée (46) qui se déplace le long d'un axe (A) et qui porte une première électrode (41), qui supporte la coiffe (20), tout en maintenant ladite coiffe; une seconde électrode (42) étant agencée au-dessus du second élément (45) et étant mobile verticalement afin d'être amenée en contact avec la partie terminale (6) de manière à distribuer le courant sur la totalité de la partie qui doit être fondue; et
- dans lequel, dans la configuration de montage, les bords de contact (23, 24) de la partie terminale (6) et de la coiffe (20) présentent une forme et des dimensions sensiblement identiques, et les électrodes (41, 42) sont agencées de telle sorte que les bords de contact (23, 24) atteignent l'état de fusion en même temps.

2. Procédé selon la revendication 1, dans lequel, dans la configuration de montage, les bords de contact (23, 24) sont identiques.

3. Procédé selon la revendication 1 ou 2, dans lequel, dans le procédé de fusion thermoélectrique, le courant fourni dans l'ensemble (31) circule à travers les bords de contact (23, 24) avec une intensité telle qu'il entraîne une augmentation de la température dans les parties de fusion (21, 22), suffisamment pour faire fondre lesdites parties de fusion (21, 22).

4. Procédé selon l'une des revendications précédentes, dans lequel, dans la configuration de montage, les parties de fusion (21, 22) entrent en contact l'une avec l'autre le long des bords de contact respectifs (23, 24) défini par des profils annulaires respectifs, chacun de ceux-ci étant sensiblement défini par une ligne courbe fermée en une boucle autour de l'axe (A).

5. Procédé selon l'une des revendications précédentes, dans lequel le bord de contact (23) de la partie terminale (6) est défini par un coin annulaire (25) agencé autour de l'axe (A).

6. Procédé selon l'une des revendications précédentes, dans lequel la partie terminale (6) est pourvue intérieurement d'un siège (11), et dans lequel la coiffe (20) comprend une partie de fermeture (26) présentant une surface latérale évasée (27), inclinée par rapport à l'axe (A), et insérable au moins partiellement dans le siège (11); la partie de fusion (22) de la coiffe (20)) étant une partie de la surface latérale (27) et le bord de contact (24) de la coiffe (20) étant défini par un profil annulaire sur la surface latérale (27).

7. Procédé selon l'une des revendications précédentes, dans lequel le bord de contact (23) de la partie terminale (6) du corps (2) consiste en une surface annulaire qui fait face à une surface latérale (27) de la coiffe (20).

8. Procédé selon l'une des revendications précédentes, dans lequel, dans la configuration de montage, la coiffe (20) comporte une rainure de collecte (28) qui sert à collecter d'éventuelles coulures de fusion qui sont formées lors du procédé de fusion thermoélectrique.

9. Procédé selon la revendication 8, dans lequel la rainure (28) est formée sur un rebord radialement extérieur (29) de la coiffe (20).

10. Elément de radiateur en aluminium (1) pour le chauffage, comprenant un corps (2) constitué d'aluminium, pourvu d'une chambre intérieure (3) pour une circulation d'eau et comprenant une partie terminale sensiblement tubulaire (6) qui s'étend le long d'un axe (A) et qui comporte une ouverture inférieure (8) délimitée par un bord d'extrémité (9) et fermée par une coiffe (20); l'élément de radiateur étant **caractérisé en ce que** la partie terminale (6) a été fermée avec la coiffe (20) par le procédé selon l'une des revendications précédentes.
